(19) Europäisches Patentamt
European Patent Office
Office européen des brevets

(11) **EP 2 250 656 B1**

(12) **FASCICULE DE BREVET EUROPEEN**

(45) Date de publication et mention
de la délivrance du brevet:
**08.02.2017 Bulletin 2017/06**

(21) Numéro de dépôt: **09719449.2**

(22) Date de dépôt: **13.02.2009**

(51) Int Cl.:
*H01G 11/04* *(2013.01)*    *H01G 9/12* *(2006.01)*

(86) Numéro de dépôt international:
**PCT/FR2009/000161**

(87) Numéro de publication internationale:
**WO 2009/112718 (17.09.2009 Gazette 2009/38)**

(54) **DISPOSITIF ANTI-SURPRESSION POUR UN SUPERCONDENSATEUR**

VORRICHTUNG ZUR VERHINDERUNG VON ÜBERDRUCK IN EINEM SUPERKONDENSATOR

DEVICE TO PREVENT OVERPRESSURE IN A SUPERCAPACITOR

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **14.02.2008 FR 0800813**

(43) Date de publication de la demande:
**17.11.2010 Bulletin 2010/46**

(73) Titulaire: **Blue Solutions**
**29500 Ergué Gabéric (FR)**

(72) Inventeurs:
• **CAUMONT, Olivier**
**F-29000 Quimper (FR)**
• **DEPOND, Jean-Michel**
**F-29000 Quimper (FR)**
• **JOURDREN, Arnaud**
**F-29500 Ergue-Gaberic (FR)**
• **AZAIS, Philippe**
**F-29000 Quimper (FR)**

(74) Mandataire: **Goulard, Sophie et al**
**Ipsilon**
**Le Centralis**
**63, avenue du Général Leclerc**
**92340 Bourg-la-Reine (FR)**

(56) Documents cités:
**EP-A- 0 118 609      EP-A- 1 118 378**
**EP-A- 1 210 972      WO-A-02/059990**
**JP-A- 2003 059 462    US-A- 3 524 112**

• **ATHAYDE A L ET AL: "METAL COMPOSITE
MEMBRANES FOR HYDROGEN SEPARATION"
JOURNAL OF MEMBRANE SCIENCE, ELSEVIER
SCIENTIFIC PUBL.COMPANY. AMSTERDAM, NL,
vol. 94, no. 1/03, 19 septembre 1994 (1994-09-19),
pages 299-311, XP000488194 ISSN: 0376-7388**

**Description**

La présente invention concerne les supercondensateurs, plus particulièrement un dispositif anti-surpression pour un supercondensateur.

Divers dispositifs électrochimiques produisent de l'hydrogène au cours de leur fonctionnement, notamment les supercondensateurs.

Un supercondensateur comprend deux électrodes à surface spécifique élevée entre lesquelles est placé un séparateur, l'ensemble étant placé dans une enceinte fermée. Le séparateur et les électrodes sont imprégnés par une solution d'un composé ionique dans un solvant liquide.

En fonctionnement, le supercondensateur génère du gaz, qui est essentiellement de l'hydrogène. Le maintien de l'hydrogène formé dans le supercondensateur provoque une augmentation de la pression interne qui est préjudiciable à la durée de vie du supercondensateur. Une surpression interne peut dégrader le supercondensateur par déformation, par ouverture ou par explosion.

Différents dispositifs ont été proposés dans l'art antérieur pour remédier à ce problème.

Des valves réversibles de dégazage sont utilisées notamment dans les batteries au plomb, dites VRLA. Elles sont constituées par une membrane polymère, notamment par une membrane en polyéthylène. Ces membranes ne conviennent pas pour les supercondensateurs, parce qu'elles n'empêchent pas l'entrée d'air dans le dispositif.

Divers supercondensateurs, notamment certains commercialisés par les sociétés Maxwell ou Epcos, sont conçus pour que le boîtier présente une zone faible, qui subit une rupture lorsque la pression interne dépasse un seuil donné. Un tel dispositif évite certes tout comportement catastrophique (notamment par explosion) du supercondensateur, mais il présente l'inconvénient d'être irréversible et ne permet par conséquent pas d'augmenter la durée de vie du supercondensateur.

Des valves de dégazage réversibles existent sur divers supercondensateurs commercialisés par la société Nippon-Chemicon. Dans ces supercondensateurs, la valve de dégazage comprend un joint élastomère maintenu en pression par une rondelle. Le liquide de l'électrolyte est le carbonate de propylène (PC) qui est un liquide peu volatil, ce qui empêche, ou tout au moins limite le dépôt du sel de l'électrolyte dans la valve. Cependant, lorsque l'électrolyte est un sel en solution dans un solvant volatil, tel que par exemple l'acétonitrile, le risque d'encrassement de la valve par le sel augmente de manière significative. Effectivement, un dépôt de sel au niveau d'une vanne ou d'une valve aboutit de manière irrémédiable à une entrée d'air et d'eau dans le supercondensateur. Il est bien connu que l'eau et l'oxygène sont des espèces chimiques très réactives qui dégradent rapidement les propriétés de l'électrolyte (et potentiellement les électrodes) et de ce fait aboutit très rapidement à la fin de vie du supercondensateur (US 6,233,135).

L'utilisation d'acétonitrile par rapport au carbonate de propylène dans un supercondensateur est recherchée parce qu'un électrolyte dans lequel le solvant est l'acétonitrile a une conductivité plus élevée que celle d'un électrolyte dont le solvant liquide est le PC. En outre, la génération de gaz est plus importante au cours du temps dans le super-condensateur lorsque le solvant est le PC. Or, la surpression interne d'un supercondensateur amène à la fin de vie par déformation, par ouverture ou par explosion. A conditions de vieillissement identiques, un supercondensateur fonctionnant avec un électrolyte à base de PC montre donc en général une durée de vie plus courte que lorsque l'électrolyte est à base d'acétonitrile.

DE-10 2005 033 476 décrit un dispositif qui utilise une membrane polymère à perméabilité sélective. La membrane est une membrane dite "non poreuse" à travers laquelle un gaz peut passer par diffusion, et non par un passage direct. Il s'agit en particulier d'une membrane polymère, notamment une membrane EPDM. L'élasticité d'une telle membrane polymère permet d'amortir les fortes productions de gaz à l'intérieur du dispositif, du fait que la membrane peut former une bulle, ce qui augmente la surface de transfert vers l'extérieur, par exemple lorsqu'une augmentation de la température provoque une augmentation de la vitesse de production du gaz. Cependant, les membranes polymères n'empêchent pas la rétrodiffusion des gaz indésirables, tel que l'oxygène, la vapeur d'eau, le monoxyde et le dioxyde de carbone, les oxydes d'azote ou tout autre gaz suffisamment petit mais néfaste au vieillissement des supercondensateurs qui fonctionnent en milieu organique ou en milieu aqueux.

De nombreux métaux présentent une perméabilité à l'hydrogène. Lorsqu'une membrane constituée par un tel métal est placée dans un flux gazeux contenant de l'hydrogène, l'hydrogène gazeux se dissocie au contact de la face de la membrane exposée au flux gazeux, l'hydrogène dissocié diffuse à travers la membrane et se recombine lorsqu'il atteint la face opposée de la membrane, et l'hydrogène moléculaire s'échappe de la membrane.

Le document WO02059990A2 concerne une cellule électrochimique contenant une membrane sélectivement perméable à l'hydrogène associée à une sortie du boîtier. Ladite membrane sélectivement perméable à l'hydrogène comporte une couche substrat et une couche de transport d'hydrogène telle qu'une couche de transport d'hydrogène à base métallique, et présente une perméabilité sélective à l'hydrogène (H2) par rapport au dioxyde de carbone (CO2) et à l'eau (H2O). Le document EP1118378A1 décrit un film transmissif possédant une couche fonctionnelle qui se compose de préférence d'une zéolite et/ ou d'un analogue de celle-ci, de particules d'oxydes inorganiques, d'un caoutchouc de silicone, d'une résine de silicone ou d'une huile de silicone, d'un composé polymère organique, ou de carbone, et un support poreux ; et un condensateur électrolytique comprenant le film. Des informations relatives à la perméabilité sélective de divers métaux et alliages métalliques par rapport à l'hydrogène et à ses isotopes peuvent être trouvées dans la littérature. On peut citer en particulier "Review of Hydrogen Isotope Permeability Through Materials", par S.A. Steward, Lawrence Livermore National Laboratory, University of California, 15 août 1983, qui fournit des données associées aux métaux et aux alliages de métaux, notamment celles du tableau ci-dessous.

| Métal | $\Phi_0(mol.m^{-1}s^{-1}.Pa^{-\frac{1}{2}})$ | $E_\Phi(K)$ | $\Phi_{25°C}$ $(mol.m^{-1}s^{-1}.Pa^{-\frac{1}{2}})$ | $\Phi_{70°C}$ |
|---|---|---|---|---|
| Aluminium [†] | $3\ 10^{-5}$ | 14800 | $8.1\ 10^{-27}$ | $5.5\ 10^{-24}$ |
| Cuivre | $8.4\ 10^{-7}$ | 9290 | $2.4\ 10^{-20}$ | $1.4\ 10^{-18}$ |
| Acier Inox | $1\ 10^{-7}$ | 8000 | $2.2\ 10^{-19}$ | $7.4\ 10^{-18}$ |
| Nickel | $3.9\ 10^{-7}$ | 6600 | $9.4\ 10^{-17}$ | $1.7\ 10^{-15}$ |
| Palladium | $2.2\ 10^{-7}$ | 1885 | $3.9\ 10^{-10}$ | $9.0\ 10^{-10}$ |
| [†] Valeur moyenne, dépend de la qualité de surface ; $E_{\Phi max}$ = 18900 K. | | | | |

US-3,350,846 décrit un procédé de récupération d'hydrogène par perméation à travers des membranes métalliques qui permettent une diffusion sélective de $H_2$. Les membranes sont constituées par Pd, un alliage PdAg, ou bien elles comprennent une couche d'un métal du groupe VB (V, Ta, Nb) revêtue sur chacune de ses faces par un film continu non poreux de Pd ou d'un alliage de PdAg, PdAu ou PdB. Dans un mode de réalisation préféré, les membranes sont portées à une température entre 300°C et 700°C, domaine de température non compatible avec une application de type supercondensateur.

Le site http://www.ceth.fr/sepmemfr.php décrit un procédé de purification de gaz par membrane métallique permettant de séparer sélectivement l'hydrogène d'un mélange gazeux. La membrane est une membrane composite tout métal constituée par trois couches. Une couche très fine mais dense de palladium constitue la partie active assurant la perméabilité sélective. Elle est supportée par une couche intermédiaire métallique à pores fins et peu épaisse qui permet d'assurer un très bon maintien de la couche dense de palladium même à des niveaux de température ou de pression élevés. La couche intermédiaire est elle-même supportée par un substrat métallique poreux plus épais. Les molécules d'hydrogène qui arrivent au contact de la couche de palladium sont adsorbées et se dissocient, les éléments résultant de la dissociation diffusent à travers la couche de palladium, et se recombinent lorsqu'ils se désorbent du palladium.

US-4,468,235 décrit un procédé pour extraire $H_2$ contenu dans un mélange de fluides en mettant le mélange de fluides (liquide ou gazeux) en contact avec une membrane constituée par alliage de titane contenant ~13% de V, ~11% de Cr et ~3% de Al et portant sur l'une de ses faces un métal choisi parmi Pd, Ni, Co, Fe, V, Nb ou Ta ou un alliage contenant l'un de ces métaux.

Des alliages de Pd tels que PdAg, PdCu, PdY par exemple, sont considérés avoir une bonne tenue mécanique à l'hydrogène et une perméabilité plus élevée que celle du palladium seul (en particulier $Pd_{75}Ag_{25}$). Par exemple, US-2,773,561 donne une comparaison de la perméabilité à l'hydrogène [exprimée en $cm^3/s/cm^2$] de Pd et d'un alliage $Pd_{75}Ag_{25}$, résumée dans le tableau suivant pour des membranes ayant une épaisseur de 25,4$\mu$m.

| Pression (MPa) | 450°C | | 550°C | |
|---|---|---|---|---|
| | Pd | PdAg | Pd | PdAg |
| 0,69 | 0,71 | 1,22 | 1,08 | 1,41 |
| 1,38 | 1,23 | 1,93 | 1,86 | 2,32 |
| 2,07 | 1,68 | 2,56 | 2,42 | 2,99 |

En outre, il est connu que pour un alliage $Pd_{100-x}Cu_x$ dans lequel x <30, le coefficient de diffusion reste inchangé, mais l'énergie d'activation de la diffusion est environ 1/3 de celle de Pd, et que la perméabilité $\Phi$ augmente par conséquent, conformément à l'équation

$$\Phi = \Phi_0\, e^{-\frac{E_\Phi}{T}}$$

dans laquelle $\Phi_0$ est une constante (en mol.m$^{-1}$s$^{-1}$.Pa$^{-\frac{1}{2}}$), $E_\Phi$ (en Kelvin) est l'énergie d'activation de la diffusion, et T est la température (en K) (Cf. *"Diffusion of hydrogen in copper-palladium alloys"*, J. Piper, J. Appl. Phys. Vol. 37, 715-721, 1966).

La perméabilité à l'hydrogène de membranes constituées par Pd ou par Ni est décrite notamment dans *"Hydrogen permeability measurement through Pd, Ni and Fe membranes, K. Yamakawa"*, et al., J. Alloys and Compounds 321, 17-23, 2001.

Des alliages à base de palladium-argent sont considérés comme ayant une diffusion efficace pour l'hydrogène, notamment dans *"Investigation of Electromigration and Diffusion of Hydrogen in Palladium and PdAg Alloy"*, R. Pietrzak, et al., Defect and Diffusion Forum, vol 143-147, 951-956, 1997).

Des membranes constituées par divers alliages de Pd (PdAg, PdY) sur support céramique sont sélectives pour la séparation d'hydrogène à partir d'un mélange gazeux. [Cf. "Catalytic membrane reactors for tritium recovery from tritiated water in the ITER fuel cycle", S. Tosti, et al., Fusion Engineering and Design, Vol. 49-50, 953-958, 2000)].

US-6,800,392 décrit également l'utilisation d'une membrane constituée par un alliage de Nb avec de 5 à 25% d'un autre métal choisi parmi Pd, Ru, Rh, Pt Au et Rh, la membrane d'alliage étant obtenue par colaminage de films des différents constituants. Il est mentionné que la solubilité de l'hydrogène dans un alliage NbPd est environ deux fois celle d'un alliage PdAg$_{23}$.

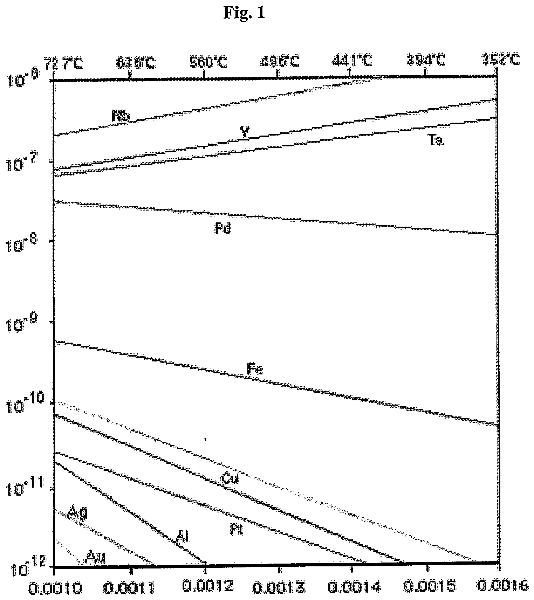

Le Niobium a une perméabilité très élevée et il est considéré comme le matériau le plus perméable à l'hydrogène par l'étude de REB Research & Consulting disponible sur http://www.rebresearch.com/H2perm2.htm d'où est extraite la figure 1 qui représente la perméabilité P en mol/mPa$^{1/2}$s, en fonction de 1/T (K$^{-1}$).

Une valeur de perméabilité de 3.2 10$^{-7}$ mol.m$^{-1}$s$^{-1}$.Pa$^{-\frac{1}{2}}$ à 425°C est par ailleurs proposée dans Journal of Membrane Science, Vol. 85, 29-38, 1993. Cependant, ces propriétés ne semblent pas aussi intéressantes aux températures auxquelles travaillent les supercondensateurs (<100°C). En particulier, l'hydrogène forme avec le Niobium un composé stable à basse température qui fragilise mécaniquement le Niobium et limite la diffusion de l'hydrogène (cf. "Extractive Metallurgy of Niobium", C.K. Gupta, CRC Press, 1994). Par ailleurs, le Niobium s'oxyde très facilement à température ambiante. Il se forme alors en surface une couche barrière à l'entrée d'hydrogène dans le matériau. A température ambiante, c'est le phénomène d'adsorption qui limite le plus la diffusion de l'hydrogène à travers une membrane de Niobium. C'est pourquoi la plupart des auteurs qui rapportent des travaux sur le Niobium indiquent avoir travaillé avec du Niobium recouvert d'une très fine couche de Palladium (épaisseur < 1$\mu$m) : le Palladium évite les problèmes d'oxydation de surface (son oxyde est immédiatement réduit en présence d'hydrogène) et favorise l'adsorption de l'hydrogène.

Ces réserves sont également valables pour le Tantale et le Vanadium. Si à haute température (>400°C) ces matériaux semblent intéressants, à plus faible température, ils présentent les mêmes défauts que le Niobium : couche d'oxydation, fragilisation liée à la formation de composés stables Métal-H$_x$, faible pouvoir d'adsorption. Là encore, les spécialistes préconisent généralement de déposer une fine couche de Palladium en surface du matériau pour un fonctionnement correct.

Les alliages V-Ti-Ni ont une perméabilité à l'hydrogène élevée, notamment l'alliage V$_{53}$Ti$_{26}$Ni$_{21}$ dont la perméabilité est de 1,0-3,7 10$^{-9}$ mol.m$^{-1}$s$^{-1}$.Pa$^{-\frac{1}{2}}$ à 22°C, qui est une valeur supérieure à celle du palladium, à savoir 3,3-4,3 10$^{-10}$. (Cf."Hydrogen Permeability of Multiphase V-Ti-Ni Metallic Membrane", Report under Contact No. DE-AC09-96SR18500 with the U.S. Department of Energy, T. M. Adams, J. Mickalonis).

Les membranes V-15%Ni-0,05%Ti ou V-15%Ni-0,05%Y avec un fin dépôt de Palladium en surface présentent des valeurs de perméabilité très intéressantes (6 10$^{-8}$ mol.m$^{-1}$s$^{-1}$.Pa$^{-\frac{1}{2}}$ à 200°C). Cependant, on observe une diminution de cette valeur avec le temps (-30% après une semaine) ce qui pourrait limiter leur intérêt pour des applications long terme comme celle envisagée dans le présent document. (cf. "V-Ni Alloy Membranes for Hydrogen Purification", Nishimura et al., JAC 330-332 (2002), pp 902-906).

Le but de la présente invention est de fournir un dispositif qui permet d'évacuer rapidement et de manière sélective de l'hydrogène formé à l'intérieur d'un supercondensateur, tout en empêchant le passage d'un autre gaz de l'extérieur vers l'intérieur du supercondensateur.

Ce but est atteint par l'utilisation d'une membrane perméable sélectivement à H$_2$, avec une vitesse de diffusion élevée.

Un supercondensateur selon l'invention comprend une enceinte fermée qui est munie de moyens pour échanger un gaz avec le milieu extérieur et dans laquelle sont placées deux électrodes à surface spécifique élevée séparées par un séparateur, le séparateur et les électrodes étant imprégnés par un électrolyte. Le supercondensateur est caractérisé en ce que les moyens pour échanger un gaz comprennent une membrane perméable à l'hydrogène et à ses isotopes et imperméable aux autres espèces gazeuses qui sont sous forme d'entités ayant une section efficace supérieure ou égale à 0,3 nm, aux températures de fonctionnement des supercondensateurs, à savoir entre -50°C et 100°C.

Une membrane utilisée dans un supercondensateur selon l'invention a une surface S (en $m^2$) et une épaisseur e (en m), et elle est constituée par un matériau choisi parmi les métaux et les alliages métalliques dont la perméabilité intrinsèque $\Phi$ (en $mol.m^{-1}s^{-1}.Pa^{-1/2}$) est sélective par rapport à l'hydrogène ou à ses isotopes et a une valeur telle que $10^{-15}\ mol.s^{-1}.Pa^{-1/2} \leq (\Phi^*S)/e \leq 10^{-9}\ mol.s^{-1}.P^{-1/2}$, de préférence $10^{-12}\ mol.s^{-1}.Pa^{-1/2} \leq (\Phi^*S)/e \leq 5.\ 10^{-10}\ mol.s^{-1}.Pa^{-1/2}$.

Un matériau qui satisfait à l'équation 1 suivante :

$$10^{-15}\ mol.s^{-1}.Pa^{-1/2} \leq (\Phi^*S)/e \leq 10^{-9}\ mol.s^{-1}.Pa^{-1/2}\quad Eq.\ 1$$

définie ci-dessus permet d'élaborer une membrane dont la surface est compatible avec les dimensions du supercondensateur.

De manière générale, la perméabilité $\Phi$ (en $mol.m^{-1}s^{-1}.Pa^{-1/2}$) dépend de la nature du couple gaz / membrane. Les mesures expérimentales montrent que $\Phi$ suit généralement une loi de type Arrhenius

$$\Phi = \Phi_0\ e^{-\frac{E_\Phi}{T}}\qquad Eq.\ 2$$

dans laquelle $\Phi_0$ est une constante (en $(mol.m^{-1}s^{-1}.Pa^{-1/2})$), $E_\Phi$ (en Kelvin) est l'énergie d'activation de la diffusion, et T la température (en °K).

Comme indiqué précédemment, on connaît des membranes constituées par un matériau métallique capable d'adsorber de l'hydrogène et de le diffuser. Cependant, parmi les nombreux matériaux métalliques, la plupart ne peuvent être utilisés comme élément anti-surpression dans un supercondensateur, parce qu'ils présentent au moins l'un des inconvénients suivants : vitesse de diffusion insuffisante, manque de tenue mécanique après adsorption d'hydrogène, difficulté de faisabilité aux épaisseurs ad hoc, perte des propriétés au cours du temps, coût. Des essais intensifs ont amenés les inventeurs à choisir, parmi les matériaux susceptibles d'adsorber et de diffuser l'hydrogène de manière sélective, ceux qui permettent d'utiliser une membrane ayant une surface compatible avec les dimensions classiques des supercondensateurs, en particulier des matériaux qui satisfont à la relation :

$$10^{-15}\ mol.s^{-1}.Pa^{-1/2} < \Phi^*S/e < 10^{-9}\ mol.s^{-1}.Pa^{-1/2}$$

Les matériaux qui répondent aux critères ci-dessus, comprennent les matériaux métalliques dans lesquels les métaux sont choisis parmi Pd, Nb, V, Ta, Ni et Fe, et les alliages métalliques d'un métal choisi parmi Pd, Nb, V et Ta et d'au moins un autre métal choisi parmi Pd, Nb, V, Ta, Fe, Al, Cu, Ru, Re, Rh, Au, Pt, Ag, Cr, Co, Sn, Zr, Y, Ni, Ce, Ti, Ir, et Mo.

La membrane d'un supercondensateur de l'invention peut avoir différentes formes, indépendamment du matériau qui la constitue.

Elle peut notamment être auto-supportée ou non auto-supportée. Dans le cas où elle est autosupportée, elle a de préférence une épaisseur supérieure ou égale à 5 $\mu$m.

Dans un mode de réalisation, la membrane est une membrane autosupportée. Ce mode de réalisation est particulièrement intéressant pour les matériaux qui ont une très grande perméabilité intrinsèque sélective pour l'hydrogène et qui peuvent avoir par conséquent une épaisseur suffisante pour assurer la tenue mécanique, tout en garantissant le respect de l'équation 1.

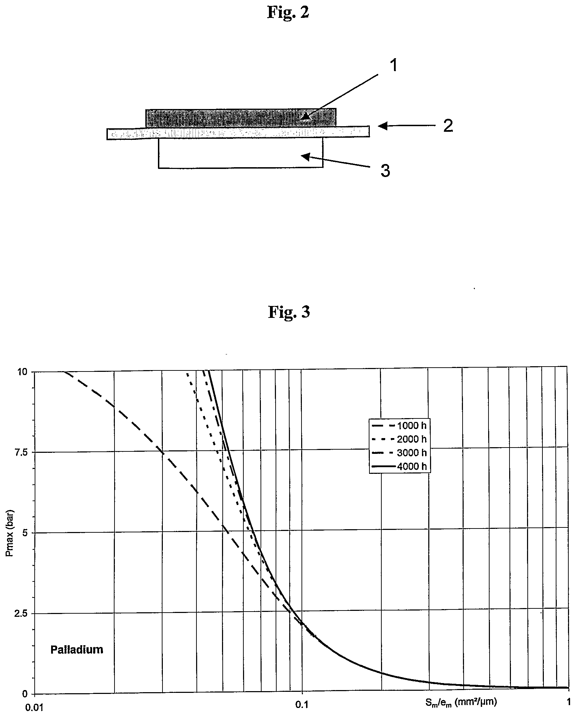

Lorsque qu'une membrane est constituée par un matériau dont la perméabilité intrinsèque nécessite que l'épaisseur soit réduite à une valeur qui ne confère pas une tenue mécanique suffisante à la membrane, la membrane peut être apposée sur une couche support ou placée entre deux couches supports. Les couches supports sont constituées par un matériau qui a une très grande perméabilité à l'hydrogène, cette perméabilité n'étant pas sélective. La structure multicouche est telle que les limites de la couche support ou des couches support ne vont pas au-delà des limites de la membrane. Une structure multicouche est représentée sur la figure 2. La couche 2 constitue la membrane sélective. Les couches 1 et 3 constituent les couches supports. La surface de la couche 2 doit être supérieure à la surface de la ou de chacune des couches supports, de sorte qu'aucun gaz ne puisse passer à travers une couche support sans passer également par la membrane sélective. Lorsque la membrane est placée entre deux couches supports, ces couches peuvent être constituées par le même matériau perméable à l'hydrogène, ou bien le matériau formant l'une des couches supports est différent du matériau formant l'autre couche. Le matériau perméable à l'hydrogène sans sélectivité peut être choisi parmi les polymères, les céramiques, le carbone, et les métaux.

La membrane à perméabilité sélective, ainsi que les couches supports peuvent être constituées par un matériau fritté.

Selon un mode de réalisation particulier de l'invention, au moins une couche additionnelle est un matériau fritté ayant une épaisseur supérieure à 0,3 mm (ce qui le rend apte à supporter une pression supérieure à 2 bars) et la membrane est une membrane de palladium ou d'un alliage palladium-argent ayant une épaisseur de 0,03 $\mu$m à 10 $\mu$m, une surface de 0, 0015 mm$^2$ à 10 mm$^2$ et le rapport S/e varie de 0,05 mm$^2$/$\mu$m à 1 mm$^2$/$\mu$m.

Le matériau de la ou des couches additionnelles perméable à l'hydrogène peut également être un polymère ou un mélange de polymères ayant de préférence une épaisseur supérieure à 0,005 mm, ce qui le rend apte à supporter une pression maximale de 2,5 bars. Dans ce cas, la membrane est une membrane de palladium ou d'un alliage palladium-argent ayant une épaisseur de 0,03 $\mu$m à 1 $\mu$m, une surface de 0,003 mm$^2$ à 1 mm$^2$ et le rapport S/e varie de 0,09 mm$^2$/$\mu$m à 1 mm$^2$/$\mu$m.

Selon une forme de réalisation particulière, le matériau perméable à l'hydrogène de la ou des couches additionnelles est un métal ou un alliage métallique et la membrane a une surface de 0,0007 mm$^2$ à 100 mm$^2$, une épaisseur de 0,03 $\mu$m à 10 $\mu$m et le rapport S/e varie de 0,025 mm$^2$/$\mu$m à 0,1 mm$^2$/$\mu$m. le matériau perméable à l'hydrogène de la ou des couches additionnelles peut en particulier être du palladium. Dans ce cas, la membrane a une surface de 0,0015 mm$^2$ à 1 mm$^2$, une épaisseur de 0,03 $\mu$m à 10 $\mu$m et le rapport S/e varie de 0,05 mm$^2$/$\mu$m à 0,1 mm$^2$/$\mu$m.

Une membrane auto-supportée particulièrement préférée a une surface comprise entre 0,15 mm$^2$ et 100 mm$^2$, une épaisseur de 5 $\mu$m à 100 $\mu$m et le rapport S/e varie de 0,03 mm$^2$/$\mu$m à 1 mm$^2$/$\mu$m.

Dans le cas d'une membrane autosupportée, c'est-à-dire ayant une épaisseur supérieure ou égale à 5 $\mu$m, un matériau métallique approprié peut être choisi parmi Pd, Nb, V et Ta. Cependant, pour tout métal autre que Pd, une couche mince (épaisseur < 1 $\mu$m) protectrice et continue de Pd doit être appliquée sur chacune des faces de la membrane. Ainsi selon une forme de réalisation particulière de l'invention, la membrane est constituée par un film d'un métal choisi parmi Nb, V et Ta ayant une épaisseur supérieure ou égale à 5 $\mu$m, placé entre deux films continus de palladium ayant une épaisseur inférieure à 1 $\mu$m. Le dépôt de ces films de palladium peut être effectué par les techniques classiques de dépôt chimique, physique ou électrochimique (CVD, PVD, dépôt électrochimique) assurant un dépôt continu et régulier.

Dans un mode de réalisation particulier, la membrane métallique est auto-supportée et constituée par du Palladium, elle a une surface comprise entre 0,25 mm$^2$ et 10 mm$^2$, une épaisseur supérieure ou égale à 5 $\mu$m, de préférence de 5 $\mu$m à 100 $\mu$m et le rapport S/e varie de 0,05 mm$^2$/$\mu$m à 0,1 mm$^2$/$\mu$m. Une membrane ayant une épaisseur de 25 $\mu$m, une surface de 1,5 mm$^2$ et un rapport S/e de 0,06 mm$^2$/$\mu$m est tout particulièrement préférée.

Dans le cas d'une membrane non autosupportée (épaisseur < 5 $\mu$m), un matériau métallique approprié peut être choisi parmi Pd, Nb, V, Ta, Ni et Fe. Cependant, pour tout métal autre métal que Pd ou Ni, une couche mince (épaisseur < 1 $\mu$m) protectrice et continue de Pd doit être appliquée sur chacune des faces de la membrane. Ainsi, selon une forme de réalisation particulière de l'invention, la membrane est constituée par un film d'un métal choisi parmi Nb, V, Ta et Fe ayant une épaisseur inférieure à 5 $\mu$m, placé entre deux films continus de palladium ayant une épaisseur inférieure à 1 $\mu$m. Selon un autre mode de réalisation la membrane est constituée par un film de palladium ou de nickel ayant une épaisseur inférieure à 5 $\mu$m. Comme pour les membranes auto-supportées, le dépôt de palladium peut être effectué par les techniques classiques de dépôt.

On peut citer, en outre, les membranes constituées par un alliage d'un métal choisi parmi Pd, Nb, V, Ta et d'au moins un métal choisi parmi Pd, Nb, V, Ta, Fe, Al, Cu, Ru, Re, Rh, Au, Pt, Ag, Cr, Co, Sn, Zr, Y, Ni, Ce, Ti, Ir et Mo. Les alliages Pd$_{75}$Ag$_{25}$, Pd$_{92}$Y$_8$, Pd$_{93,5}$Ce$_{6,5}$, Pd$_{60}$Cu$_{40}$, V$_{85}$Ni$_{15}$ stabilisé à 0,05% d'Yttrium ou de Titane, V$_{53}$Ti$_{26}$Ni$_{21}$, V$_{50}$Nb$_{50}$, V$_{13}$Cr$_{11}$Al$_3$Ti$_{73}$ (alliage Titane VC120), Nb$_{56}$Ti$_{23}$Ni$_{21}$, Nb$_{68}$Ti$_{17}$Ni$_{15}$ et Nb$_{99}$Zr$_1$ ont des perméabilités particulièrement élevées. Par exemple, l'alliage V53Ti26Ni21 a une constante $\Phi_0$ de 1,3 à 3,7.10$^{-9}$ mol.m$^{-1}$s$^{-1}$.Pa$^{-1/2}$.

L'enceinte d'un supercondensateur comprend une paroi latérale cylindrique fermée à chacune de ses extrémités par un couvercle. La paroi latérale est généralement sous forme d'un cylindre à base substantiellement circulaire. Les couvercles sont constitués par un matériau conducteur, généralement un matériau métallique, et ils sont isolés électriquement l'un par rapport à l'autre. Si la paroi latérale est un matériau non conducteur, elle sert d'isolant entre les couvercles. Si la paroi latérale est constituée par un matériau métallique, elle est fixée à au moins un des deux couvercles par un joint isolant ou une colle isolante. Il est également possible que l'un des deux couvercles et la paroi latérale forment une seule et même pièce.

La membrane est fixée au supercondensateur par divers moyens choisis en fonction des moyens pour échanger un gaz dont le supercondensateur est muni. Néanmoins la membrane et son système de fixation ne modifie en rien l'herméticité de l'enceinte du supercondensateur aux corps autres que l'hydrogène.

Lorsque les moyens pour échanger un gaz sont sous forme d'une ouverture dans l'enceinte et la membrane est une pastille de métal ou d'un alliage métallique, elle peut être fixée sur l'enceinte autour de ladite ouverture par soudage, par brasage, par brasage-diffusion, ou par sertissage.

Une membrane sous forme d'une pastille peut en outre être insérée en force dans les moyens pour échanger un gaz.

La membrane peut être sous forme d'un tube métallique fermé à l'une de ses extrémités, ouvert à l'autre extrémité et placé dans l'enceinte de telle sorte que son extrémité ouverte soit fixé aux moyens pour échanger un gaz, par exemple par des joints isolants ou par collage à l'aide d'un matériau isolant.

Lorsque la structure de la membrane comporte une couche support de polymère, elle peut être fixée sur les moyens d'échange de gaz par scellage, collage ou sertissage. Cependant la membrane à perméabilité sélective doit au moins recouvrir l'ouverture dans l'enceinte.

Le matériau constituant la membrane, ainsi que les dimensions de la membrane requises pour un supercondensateur donné, peuvent être déterminés par l'homme de métier, notamment à l'aide des données suivantes.

Des mesures de pression interne sur supercondensateur sans fuite ont montré que la pression interne P (en Pa) augmente proportionnellement à la durée de vieillissement t selon l'équation 3 dans laquelle k est une constante dépendant de la température et de la tension de vieillissement :

$$P(t) = k\, t \qquad \text{Eq. 3}$$

L'hydrogène pouvant être considéré comme un gaz parfait aux pressions considérées, la relation suivante s'applique, dans laquelle $V_1$ est le volume libre à l'intérieur du supercondensateur (en $m^3$), $n_{H2}$ gaz est la quantité de gaz hydrogène (en mol) dans le volume libre $V_1$, R est la constante des gaz parfaits (R = 8,314 S.I.) et T est la température (en °K) :

$$P(t)\, V_1 = n_{H2\ gaz}(t)\, R\, T \qquad \text{Eq. 4}$$

Par ailleurs, un supercondensateur peut contenir un matériau ayant des propriétés d'adsorption de l'hydrogène, par exemple les carbones activés. On observe classiquement la relation suivante, dans laquelle $m_{ads}$ est la masse (en g) de matière pouvant adsorbant l'hydrogène, $n_{H2\ ads}$ et la quantité de gaz hydrogène adsorbée (en mol) et $\xi$ est une constante qui dépend de la température :

$$n_{H2\ ads}(t) = \xi\, m_{ads}\, P(t) \qquad \text{Eq. 5}$$

La quantité d'hydrogène produit au cours du vieillissement dans un supercondensateur sans fuite, notée $n_{H2}$, est donc proportionnelle à P, donc à la durée t, conformément à l'équation suivante :

$$n_{H2}(t) = n_{H2\ gaz}(t) + n_{H2\ ads}(t) = \left( \frac{V_1}{RT} + \xi\, m_{ads} \right) P(t) = \alpha\, t \qquad \text{Eq. 6}$$

La constante $\alpha$ dépend de la température et de la tension de fonctionnement du supercondensateur, mais elle n'est pas liée à l'existence ou non d'une fuite sélective d'hydrogène à travers l'enveloppe du supercondensateur. Dans le cas d'un supercondensateur équipé d'une membrane, une partie de $n_{H2}$, notée $n_{H2\ diff}$, diffuse à travers la membrane :

$$n_{H2}(t) = n_{H2\ gaz}(t) + n_{H2\ ads}(t) + n_{H2\ diff}(t) \qquad \text{Eq. 7}$$

La 1$^{\text{ère}}$ loi de Fick donne la valeur du flux à travers la membrane $\dfrac{d\, n_{H2\ diff}}{dt}$ en fonction de la surface $S_m$ et de l'épaisseur $e_m$ de la membrane, ainsi que de la perméabilité intrinsèque $\Phi$ du matériau qui constitue la membrane, selon l'équation :

$$\frac{d\, n_{H_2\ diff}}{dt} = \phi\, \frac{S_m}{e_m}\, \sqrt{P(t)} \qquad \text{Eq. 8}$$

Dériver l'équation 7 donne une équation différentielle (Eq. 9) dont la résolution fournit l'évolution dans le temps de la pression interne dans le supercondensateur équipé d'une membrane (Eq. 8) (avec la condition initiale P=0 à t=0) :

$$\frac{d\,n_{H2}}{dt} = \left(\frac{V_1}{R\,T}\right)\frac{d\,P}{dt} + \xi\,m_{ads}\,\frac{d\,P}{dt} + \phi\,\frac{S_m}{e_m}\sqrt{P(t)} = \alpha \qquad \text{Eq. 9}$$

$$-2\,\frac{\dfrac{V_1}{RT}+\xi\,m_{ads}}{\phi\dfrac{S_m}{e_m}}\left[\sqrt{P(t)}+\frac{\alpha\,e_m}{\phi\,S_m}\ln\left(1-\frac{\phi\,S_m}{\alpha\,e_m}\sqrt{P(t)}\right)\right] = t \qquad \text{Eq. 10}$$

L'équation 10 permet de déterminer la valeur limite de pression à l'intérieur du supercondensateur équipé d'une membrane lorsque le temps va à l'infini :

$$t\rightarrow\infty \iff 1-\frac{\phi\,S_m}{\alpha\,e_m}\sqrt{P}\rightarrow 0 \implies P_{lim}=\left(\frac{\alpha\,e_m}{\phi\,S_m}\right)^2 \qquad \text{Eq. 11}$$

L'équation 10 permet également de calculer les caractéristiques de la membrane en fonction de la durée de vie FdV souhaitée du supercondensateur et de la pression maximale admissible $P_{max}$ sachant que $P_{max} < P_{lim}$ :

$$-2\,\frac{\dfrac{V_1}{RT}+\xi\,m_{ads}}{\phi\dfrac{S_m}{e_m}}\left[\sqrt{P_{max}}+\frac{\alpha\,e_m}{\phi\,S_m}\ln\left(1-\frac{\phi\,S_m}{\alpha\,e_m}\sqrt{P_{max}}\right)\right] = FdV$$

La présente invention est illustrée par les exemples de réalisation suivants, auxquels elle n'est cependant pas limitée.

**Exemple 1**

Une membrane a été calculée, pour un supercondensateur ayant une capacité de 2600 F qui présente les caractéristiques suivantes :

- L'enceinte du supercondensateur est constituée par une paroi cylindrique métallique fermée par deux couvercles conducteurs formant les pôles du supercondensateur et isolés de la paroi métallique par une matière isolante ;
- L'enceinte a un diamètre de 7 cm et une hauteur de 10 cm ;
- Le volume libre à l'intérieur du supercondensateur $V_1$ est de 50 cm$^3$ ;
- L'électrolyte est une solution 1 M de Tétraéthylammonium tétrafluoroborate (TEABF$_4$) dans l'acétonitrile ;
- Le séparateur est un film de cellulose de 25 $\mu$m d'épaisseur, placé entre deux électrodes constituées chacune par une feuille d'aluminium portant une couche de carbone activé, le séparateur étant en contact avec la couche de carbone de chaque électrode, et l'ensemble étant enroulé, le carbone activé ayant une masse totale de 100 g, ce matériau constituant en outre la masse $m_{ads}$ de matériau adsorbant de l'hydrogène à l'intérieur du supercondensateur, dont l'efficacité d'adsorption $\xi$ est de 0,1 mmol.g$^{-1}$.bar$^{-1}$ ;
- L'une des électrodes est reliée à l'un des couvercles de l'enceinte et l'autre électrode est connectée à l'autre couvercle de l'enceinte ;
- La température de fonctionnement T est de 70°C ;
- Le vieillissement est déterminé sous tension constante 2,7 V, ce qui correspond à un facteur $\alpha$ de 0,15 mmol.h$^{-1}$
- La durée de vie souhaitée FdV est de 2000 heures ;
- La pression maximale $P_{max}$ admissible à l'intérieur du supercondensateur est de 1 à 7 bars.

Membrane en palladium

Si le matériau retenu pour la membrane est le palladium, l'équation 2 devient :

$$\Phi = 2{,}2 \ 10^{-7} \ e^{-\frac{1885}{T+273}} \ mol.m^{-1}.s^{-1}.Pa^{-\frac{1}{2}}$$

Pour un supercondensateur fonctionnant à 70°C, $\Phi$ est de $9.10^{-10}$ mol.m$^{-1}$.s$^{-1}$.Pa$^{-\frac{1}{2}}$.

La figure 3 montre un abaque qui donne le rapport $S_m/e_m$ (en mm$^2$.$\mu$m$^{-1}$) pour une membrane de palladium en fonction de la pression maximale admissible $P_{max}$ (en bar) et de la durée de vie FdV souhaitée (en h).

Cette figure 3 montre qu'une membrane de palladium ayant une surface de l'ordre de quelques mm$^2$ et une épaisseur de l'ordre d'une centaine de $\mu$m (rapport S/e de l'ordre de 0,05 mm$^2$/$\mu$m) permet d'obtenir le résultat souhaité. Une membrane de ce type est réalisable mécaniquement, lorsque le supercondensateur contient un matériau adsorbant l'hydrogène.

A titre de comparaison, l'utilisation d'une membrane en aluminium et d'une membrane en acier a été envisagée.

Membrane en aluminium

Si le matériau retenu pour la membrane est le l'aluminium, l'équation 2 devient :

$$\Phi = 3 \ 10^{-5} \ e^{-\frac{14800}{T+273}} \ mol.m^{-1}.s^{-1}.Pa^{-\frac{1}{2}}$$

Pour un supercondensateur fonctionnant à 70°C, $\Phi$ est de $5{,}5. \ 10^{-24}$ mol.m$^{-1}$.s$^{-1}$.Pa$^{-\frac{1}{2}}$.

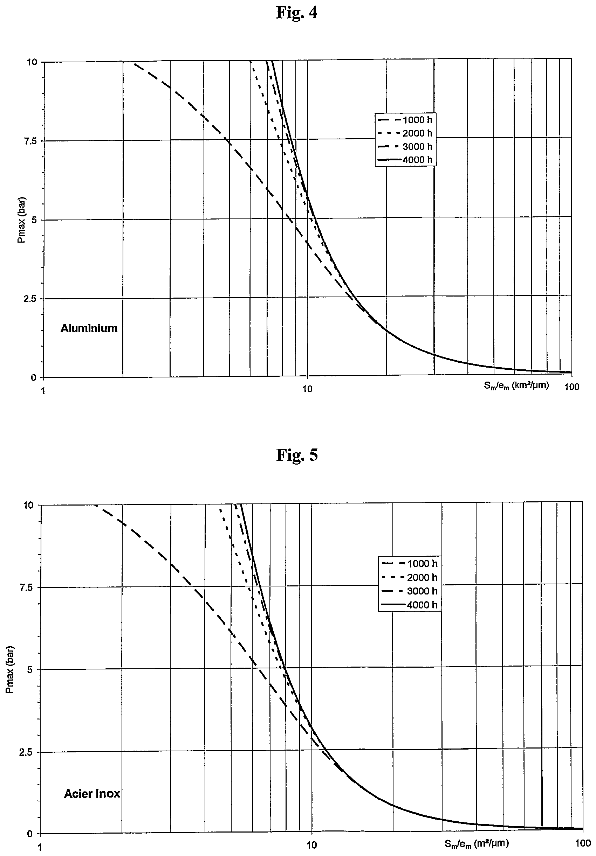

La figure 5 montre un abaque qui donne le rapport $S_m/e_m$ (en mm$^2$.$\mu$m$^{-1}$) pour une membrane d'aluminium en fonction de la pression maximale admissible $P_{max}$ (en bar) et de la durée de vie FdV souhaitée (en h).

Cette figure montre qu'une membrane en aluminium devrait avoir une surface de l'ordre de quelques km$^2$ pour une épaisseur de l'ordre du $\mu$m, pour obtenir le résultat souhaité. Une telle membrane ne peut donc être envisagée concrètement dans un supercondensateur.

Membrane en acier

Si le matériau retenu pour la membrane est l'acier, l'équation 2 devient :

$$\Phi = 1 \ 10^{-7} \ e^{-\frac{8000}{T+273}} \ mol.m^{-1}.s^{-1}.Pa^{-\frac{1}{2}}$$

Pour un supercondensateur fonctionnant à 70°C, $\Phi$ est de $7{,}4. \ 10^{-18}$ mol.m$^{-1}$.s$^{-1}$.Pa$^{-\frac{1}{2}}$.

La figure 4 montre un abaque qui donne le rapport $S_m/e_m$ (en mm$^2$.$\mu$m$^{-1}$) pour une membrane en acier inox en fonction de la pression maximale admissible $P_{max}$ (en bar) et de la durée de vie FdV souhaitée (en h).

Cette figure montre qu'une membrane en acier inox devrait avoir une surface de l'ordre de quelques m$^2$ pour une épaisseur de l'ordre du $\mu$m, pour obtenir le résultat souhaité. Une telle membrane ne peut être envisagée concrètement dans un supercondensateur.

**Exemple 2**

Cet exemple illustre un mode de réalisation de l'invention dans lequel une membrane à perméabilité sélective est placée directement en contact avec un orifice ménagé dans le couvercle d'un supercondensateur.

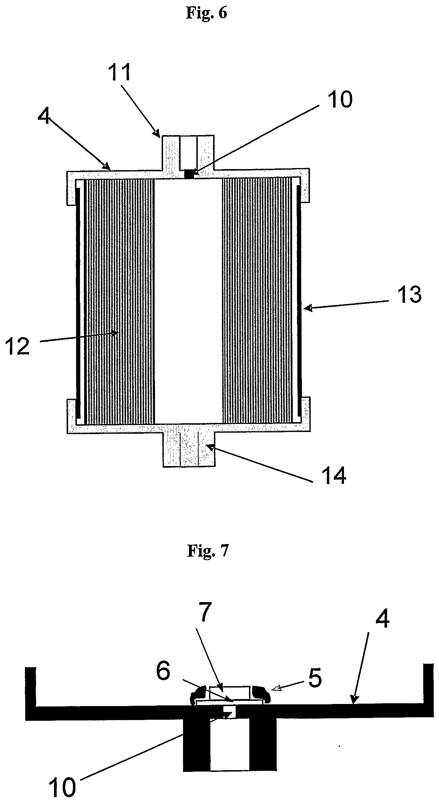

La figure 6 représente une vue schématique en coupe d'un supercondensateur. Le supercondensateur comprend une paroi latérale cylindrique 13, un couvercle 4 comprenant une ouverture 10 surmontée par une borne creuse 11 et un couvercle 14. Le supercondensateur contient un élément bobiné 12, constitué par l'enroulement d'un multi-couche électrode /séparateur/électrode tel que décrit dans l'exemple 1. L'orifice 10 est destiné à l'évacuation de l'hydrogène qui se forme au cours du fonctionnement du supercondensateur.

Dans le mode de réalisation de la figure 6, la membrane à perméabilité sélective est un fritté d'un métal approprié, par exemple du palladium, embouti dans l'orifice 10.

**Exemple 3**

Cet exemple illustre un couvercle analogue à celui de la figure 6, avec un autre mode de réalisation de la membrane.

Sur la figure 7, le couvercle 4 en cours d'élaboration est représenté face interne vers le haut. Une pastille de palladium 6 est posée sur l'orifice central 10, une couche 7 d'un matériau sur lequel la colle n'adhère pas (par exemple de l'EPDM) est posée par-dessus la pastille 6, et une colle 5 est appliquée pour maintenir le matériau 7 et la pastille 6 sur le couvercle 4. Le matériau 7 est ensuite retiré, laissant ainsi le palladium libre des deux côtés. Le système formé par la colle 5 et la pastille de palladium 6 restant après élimination du matériau 7 est un système perméable à l'hydrogène de manière sélective.

Un test de fuite a été effectué sur un supercondensateur muni d'un tel couvercle, afin de tester l'étanchéité de l'enceinte du supercondensateur. Le test a été effectué par la méthode dite "méthode par aspersion" selon le mode opératoire suivant.

On injecte de l'hélium dans l'enceinte du super-condensateur avant de la fermer, puis on la place sous tirage d'une pompe turbo-moléculaire intégrée à un testeur de fuite de type ASM142. Dans ces conditions, les molécules d'hélium sont suffisamment petites (masse molaire 4 $g.mol^{-1}$) pour pouvoir s'infiltrer rapidement dans les micro-ouvertures, fissures et pores de l'enveloppe de l'élément.

Une cellule de mesure est montée en série de la pompe turbo-moléculaire, et elle est constituée par un spectromètre de masse à déflexion magnétique, spécifiquement réglé pour détecter les ions $He^{2+}$ produits par ionisation des atomes d'hélium dans la cellule. Le courant d'ions d'hélium ainsi détecté est converti en débit de fuite global (à travers les fissures, les pores et les micro-ouvertures de l'enceinte du supercondensateur). La fuite est exprimée en mbar.l/s. Elle représente la quantité d'hélium qui s'échappe du supercondensateur. Les résultats sont donnés dans le tableau ci-dessous, pour un test témoin (sans membrane anti-surpression) et les 5 tests avec une membrane selon l'invention, formée par une pastille de palladium. Le niveau de fuite est suffisamment faible pour que l'on puisse considérer que l'enceinte est étanche à l'hélium et *a fortiori* aux gaz constitués pas des entités plus grosses que l'hélium, et que l'hydrogène sera évacué uniquement par la membrane sélective.

| N° Essais | Témoin | 1 | 2 | 3 | 4 | 5 |
|---|---|---|---|---|---|---|
| Fuite (mbar.l/s) | $1,5\ 10^{-9}$ | $2,2\ 10^{-9}$ | $1,9\ 10^{-9}$ | $2,6\ 10^{-9}$ | $1,9\ 10^{-9}$ | $4,2\ 10^{-9}$ |

**Exemple 4**

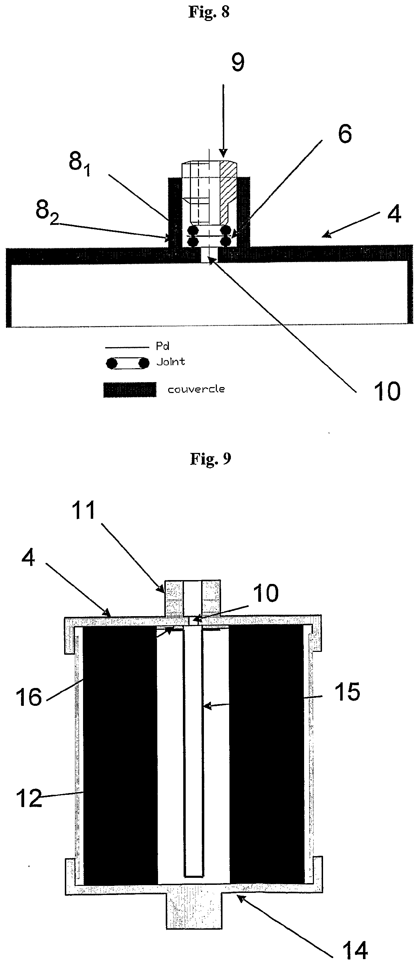

Cet exemple, représenté sur la figure 8, illustre un couvercle analogue à celui de la figure 6, avec un autre mode de réalisation de la membrane.

La figure 8 représente un couvercle 4 d'un supercondensateur (face interne vers le bas), un ensemble "joint $8_1$/ une pastille de palladium 6 / joint $8_2$" posé sur un orifice central du couvercle, et une vis 9 qui maintient l'ensemble par-dessus l'orifice 10.

Pour confirmer l'étanchéité du système, un test de fuite a été réalisé sur 4 couvercles munis d'un dispositif anti-surpression selon la figure 7. La "fuite" est exprimée en mbar.l/s.

| N° Essais | Témoin | 1 | 2 | 3 | 4 |
|---|---|---|---|---|---|
| Fuite (mbar.L/s) | $4,6\ 10^{-9}$ | $3,4\ 10^{-9}$ | $4,9\ 10^{-9}$ | $3,00\ 10^{-9}$ | $3,90\ 10^{-9}$ |

Un supercondensateur ayant une capacité de 2600 F comportant un dispositif anti-surpression conforme au présent exemple, réalisé avec une pastille de palladium ayant une épaisseur de 100 $\mu$m et un diamètre de 3 mm a montré une durée de vie de 2000 heures. Par comparaison, un supercondensateur analogue sans dispositif anti-surpression a montré une durée de vie de 1000 heures, les deux supercondensateurs étant utilisés dans les mêmes conditions.

**Exemple 5**

Cet exemple illustre un mode de réalisation d'une membrane tubulaire, représenté sur la figure 9.

La figure 9 représente une vue schématique en coupe d'un supercondensateur. Le supercondensateur comprend une paroi latérale cylindrique 13, un fond 14 et un couvercle 4 comprenant une ouverture 10 surmontée par une borne creuse 11 et il contient un élément bobiné 12 analogue à celui de l'exemple 1. L'orifice 10 est destiné à l'évacuation de l'hydrogène qui se forme au cours du fonctionnement du supercondensateur.

La membrane est sous forme d'un tube 15 fermé à l'une de ses extrémités et ouvert à l'autre extrémité. L'extrémité ouverte est en regard de l'ouverture 10 du couvercle 4. Le tube 15 comprend une collerette 16 autour de son extrémité ouverte, par laquelle il est collé contre la paroi interne du couvercle autour de l'ouverture 10 à l'aide d'une colle isolante. Le tube est constitué par une feuille d'un matériau approprié, par exemple une feuille de palladium.

Ce mode de réalisation augmente de manière substantielle la surface S de la membrane. Il permet ainsi d'augmenter l'épaisseur de la membrane pour améliorer sa tenue mécanique, et/ou d'augmenter le volume d'hydrogène échangé.

## Revendications

1. Supercondensateur comprenant une enceinte fermée qui est munie de moyens pour échanger un gaz avec le milieu extérieur et dans laquelle sont placées deux électrodes à surface spécifique élevée séparées par un séparateur, le séparateur et les électrodes étant imprégnés par un électrolyte, **caractérisé en ce que** les moyens pour échanger un gaz comprennent une membrane (2) perméable à l'hydrogène et à ses isotopes et imperméable aux espèces gazeuses qui ont une section efficace supérieure ou égale à 0,3 nm, à une température entre -50°C et 100°C, et **en ce que** la membrane a une surface S (en m$^2$) et une épaisseur e (en m), et qu'elle est constituée par un matériau choisi parmi les métaux et les alliages métalliques et dont la perméabilité intrinsèque $\Phi$ (en mol.m$^{-1}$.s$^{-1}$.Pa$^{-1/2}$) est sélective par rapport à l'hydrogène et a une valeur telle que $10^{-15}$ mol.s$^{-1}$.Pa$^{-1/2} \leq (\Phi{*}S)/e \leq 10^{-9}$ mol.s$^{-1}$.Pa$^{-1/2}$

2. Supercondensateur selon la revendication 1, **caractérisé en ce que** $10^{-12}$mol.s$^{-1}$.Pa$^{1/2} \leq (\Phi{*}S)/e \leq 5\ 10^{-10}$ mol.s$^{-1}$.Pa$^{-1/2}$

3. Supercondensateur selon la revendication 1 ou 2, **caractérisé en ce que** les métaux sont choisis parmi Pd, Nb, V, Ta, Ni et Fe et **en ce que** les alliages métalliques sont choisis parmi les alliages d'un métal choisi parmi Pd, Nb, V et Ta et d'au moins un autre métal choisi parmi Pd, Nb, V, Ta, Fe, Al, Cu, Ru, Re, Rh, Au, Pt, Ag, Cr, Co, Sn, Zr, Y, Ni, Ce, Ti, Ir et Mo.

4. Supercondensateur selon l'une quelconque des revendications 1 à 3, **caractérisé en ce que** la membrane (2) porte sur au moins l'une de ses surfaces, une couche additionnelle (1, 3) d'un matériau perméable à l'hydrogène dont les limites ne vont pas au-delà des limites de la membrane (2).

5. Supercondensateur selon la revendication 4, **caractérisé en ce que** la membrane (2) porte deux couches additionnelles (1, 3) constituées par le même matériau perméable à l'hydrogène ou deux couches additionnelles constituées par des matériaux différents.

6. Supercondensateur selon la revendication 4 ou 5, **caractérisé en ce que** le matériau perméable à l'hydrogène de la ou des couches additionnelles (1, 3) est choisi parmi les polymères, les céramiques, le carbone et les métaux.

7. Supercondensateur selon l'une quelconque des revendications 4 à 6, **caractérisé en ce que** le matériau perméable à l'hydrogène de la couche ou des couches additionnelles (1, 3) est un métal ou un alliage métallique et que la membrane (2) a une surface de 0,0007 mm$^2$ à 100 mm$^2$, une épaisseur de 0,03 $\mu$m à 10 $\mu$m et que le rapport S/e varie de 0,025 mm$^2$/$\mu$m à 0,1 mm$^2$/$\mu$m.

8. Supercondensateur selon la revendication 7, **caractérisé en ce que** le matériau perméable à l'hydrogène de la couche ou des couches additionnelles (1,3) est du palladium et que la membrane (2) a une surface de 0,0015 mm$^2$ à 1 mm$^2$ et que le rapport S/e varie de 0,05 mm$^2$/$\mu$m à 0,1 mm$^2$/$\mu$m.

9. Supercondensateur selon la revendication 4, **caractérisé en ce que** l'un au moins des éléments parmi la membrane (2) et la ou les couches additionnelles (1, 3) est un matériau fritté.

10. Supercondensateur selon la revendication 9, **caractérisé en ce qu'**au moins une couche additionnelle (1, 3) est un matériau fritté ayant une épaisseur supérieure à 0,3 mm et **en ce que** la membrane (2) est une membrane de palladium ou d'un alliage palladium-argent ayant une épaisseur de 0,03 $\mu$m à 10 $\mu$m, une surface de 0,0015 mm$^2$ à 10 mm$^2$ et dans laquelle le rapport S/e varie de 0,05 mm$^2$/$\mu$m à 1 mm$^2$/$\mu$m.

11. Supercondensateur selon la revendication 6, **caractérisé en ce que** le matériau perméable à l'hydrogène de la ou des couches additionnelles (1, 3) est un polymère ou un mélange de polymères ayant une épaisseur supérieure à 0,05 mm et **en ce que** la membrane (2) est une membrane de palladium ou d'un alliage palladium-argent ayant une épaisseur de 0,03 $\mu$m à 1 $\mu$m, une surface de 0,003 mm$^2$ à 1 mm$^2$ et dans laquelle le rapport S/e varie de 0,09 mm$^2$/$\mu$m à 1 mm$^2$/$\mu$m.

12. Supercondensateur selon l'une quelconque des revendications 1 à 3, **caractérisé en ce que** la membrane (2) est une membrane autosupportée.

13. Supercondensateur selon la revendication 12, **caractérisé en ce que** la membrane (2) a une épaisseur supérieure ou égale à 5 $\mu$m.

14. Supercondensateur selon la revendication 12 ou 13, **caractérisé en ce que** la membrane (2) a une surface comprise entre 0,15 mm$^2$ et 100 mm$^2$, une épaisseur de 5 $\mu$m à 100 $\mu$m et que le rapport S/e varie de 0,03 mm$^2$/$\mu$m à 1 mm$^2$/$\mu$m.

15. Supercondensateur selon la revendication 13, **caractérisé en ce que** la membrane (2) est une membrane de palladium et qu'elle a une surface comprise entre 0,25 mm$^2$ et 10 mm$^2$ et que le rapport S/e varie de 0,05 mm$^2$/$\mu$m à 0,1 mm$^2$/$\mu$m.

16. Supercondensateur selon la revendication 15, **caractérisé en ce que** la membrane (2) a une épaisseur de 25 $\mu$m, une surface de 1,5 mm$^2$ et que le rapport S/e est de 0,06 mm$^2$/$\mu$m.

17. Supercondensateur selon la revendication 12, **caractérisé en ce que** la membrane (2) est constituée par un film d'un métal choisi parmi Nb, V et Ta ayant une épaisseur supérieure ou égale à 5 $\mu$m, placé entre deux films continus de palladium ayant une épaisseur inférieure à 1 $\mu$m.

18. Supercondensateur selon l'une quelconque des revendications 1 à 3, **caractérisé en ce que** la membrane (2) est une membrane non autosupportée, constituée par un film de palladium ou de nickel ayant une épaisseur inférieure à 5 $\mu$m.

19. Supercondensateur selon l'une quelconque des revendications 1 à 3, **caractérisé en ce que** la membrane (2) est une membrane non autosupportée constituée par un film d'un métal choisi parmi Nb, V, Ta, et Fe, ayant une épaisseur inférieure à 5 $\mu$m, placé entre deux films continus de palladium ayant une épaisseur inférieure à 1 $\mu$m.

20. Supercondensateur selon la revendication 3, **caractérisé en ce que** l'alliage est choisi parmi Pd$_{75}$Ag$_{25}$, Pd$_{92}$Y$_8$, Pd$_{93,5}$Ce$_{6,5}$, Pd$_{60}$Cu$_{40}$, V$_{85}$Ni$_{15}$ stabilisé à 0,05% d'Yttrium ou de Titane, V$_{53}$Ti$_{26}$Ni$_{21}$, V$_{50}$Nb$_{50}$, V$_{13}$Cr$_{11}$Al$_3$Ti$_{73}$, Nb$_{56}$Ti$_{23}$Ni$_{21}$, Nb$_{68}$Ti$_{17}$Ni$_{15}$ et Nb$_{99}$Zr$_1$.

21. Supercondensateur selon l'une quelconque des revendications 1 à 3, **caractérisé en ce que** la membrane (2) est un tube (15) métallique fermé à l'une de ses extrémités, ouvert à l'autre extrémité et placé dans l'enceinte de telle sorte que son extrémité ouverte soit fixée aux moyens pour échanger un gaz.

22. Supercondensateur selon la revendication 1, **caractérisé en ce que** les moyens pour échanger un gaz sont sous forme d'une ouverture (10) dans l'enceinte.

23. Supercondensateur selon la revendication 22, **caractérisé en ce que** la membrane (2) est constituée par une pastille de métal ou d'un alliage métallique, fixée autour de ladite ouverture (10) par soudage, brasage, brasage-diffusion, ou sertissage.

## Patentansprüche

1. Superkondensator, umfassend eine geschlossene Hülle, die mit Mitteln zum Austausch eines Gases mit dem Außenmilieu ausgestattet ist und in welcher zwei von einem Separator getrennte Elektroden mit spezieller erhöhter Oberfläche platziert sind, wobei der Separator und die Elektroden mit einem Elektrolyt imprägniert sind, **dadurch gekennzeichnet, dass** die Gasaustauschmittel eine für Wasserstoff und für seine Isotope durchlässige und für Gasspezies, die einen effizienten Querschnitt von über oder gleich 0,3 nm haben, bei einer Temperatur zwischen -50 °C und 100 °C undurchlässige Membran (2) umfassen und dass die Membran eine Oberfläche S (en m) und eine Dicke e (en m) hat und dass sie aus einem Material gebildet ist, das aus dem Metallen und den Metalllegierungen gebildet ist und dessen intrinsische Permeabilität $\Phi$ (in $mol.m^{-1}.s^{-1}.Pa^{-1/2}$) in Bezug auf Wasserstoff selektiv ist und einen Wert wie $10^{-15}$ $mol.m^{-1}.s^{-1}.Pa^{-1/2} \leq (\Phi*S)/e \leq 10^{-9}$ $mol.m^{-1}.s^{-1}.Pa^{-1/2}$ hat.

2. Superkondensator nach Anspruch 1, **dadurch gekennzeichnet, dass** $10^{-12}$ $mol.m^{-1}.s^{-1}.Pa^{-1/2} \leq (\Phi*S)/e \leq 5$ $10^{-10}$ $mol.m^{-1}.s^{-1}.Pa^{-1/2}$.

3. Superkondensator nach Anspruch 1 oder 2, **dadurch gekennzeichnet, dass** die Metalle aus Pd, Nb, V, Ta, Ni und Fe ausgewählt sind und dass die Metalllegierungen aus den Legierungen eines Metalls ausgewählt sind, das aus Pd, Nb, V und Ta ausgewählt ist und mindestens einem anderen Metall, das aus Pd, Nb, V, Ta, Fe, Al, Cu, Ru, Re, Rh, Au, Pt, Ag, Cr, Co, Sn, Zr, Y, Ni, Ce, Ti, Ir und Mo ausgewählt ist.

4. Superkondensator nach einem der Ansprüche 1 bis 3, **dadurch gekennzeichnet, dass** die Membran (2) auf mindestens einer ihrer Oberflächen eine zusätzliche Schicht (1, 3) eines für Wasserstoff durchlässigen Materials trägt, deren Grenzen die Grenzen der Membran (2) nicht überschreiten.

5. Superkondensator nach Anspruch 4, **dadurch gekennzeichnet, dass** die Membran (2) zwei zusätzliche Schichten (1, 3), die von demselben für Wasserstoff durchlässigen Material gebildet sind, oder zwei zusätzliche Schichten, die von unterschiedlichen Materialien gebildet sind, trägt.

6. Superkondensator nach Anspruch 4 oder 5, **dadurch gekennzeichnet, dass** das für Wasserstoff durchlässige Material der zusätzlichen Schicht(en) (1, 3) aus den Polymeren, den Keramiken, dem Kohlenstoff und den Metallen ausgewählt ist.

7. Superkondensator nach einem der Ansprüche 4 bis 6, **dadurch gekennzeichnet, dass** das für Wasserstoff durchlässige Material der zusätzlichen Schicht(en) (1, 3) ein Metall oder eine Metalllegierung ist und dass die Membran (2) eine Oberfläche von 0,0007 $mm^2$ bis 100 $mm^2$, eine Dicke von 0,03 $\mu m$ bis 10 $\mu m$ hat und dass das Verhältnis S/e von 0,025 $mm^2/\mu m$ bis 0,1 $mm^2/\mu m$ schwankt.

8. Superkondensator nach Anspruch 7, **dadurch gekennzeichnet, dass** das für Wasserstoff durchlässige Material der zusätzlichen Schicht(en) (1, 3) Palladium ist und dass die Membran (2) eine Oberfläche von 0,0015 $mm^2$ bis 1 $mm^2$ hat und dass das Verhältnis S/e von 0,05 $mm^2/\mu m$ bis 0,1 $mm^2/\mu m$ schwankt.

9. Superkondensator nach Anspruch 4, **dadurch gekennzeichnet, dass** mindestens eines der Elemente von der Membran (2) und der oder den zusätzlichen Schichten (1, 3) ein gesintertes Material ist.

10. Superkondensator nach Anspruch 9, **dadurch gekennzeichnet, dass** mindestens eine zusätzliche Schicht (1, 3) ein gesintertes Material mit einer Dicke über 0,3 mm ist und dass die Membran (2) eine Palladium- oder Palladium-Silber-Legierungsmembran mit einer Dicke von 0,03 $\mu m$ bis 10 $\mu m$, einer Oberfläche von 0,0015 $mm^2$ bis 10 $mm^2$ ist und in welcher das Verhältnis S/e von 0,05 $mm^2/\mu m$ bis 1 $mm^2/\mu m$ schwankt.

11. Superkondensator nach Anspruch 6, **dadurch gekennzeichnet, dass** das für Wasserstoff durchlässige Material der durchlässigen Schicht(en) (1, 3) ein Polymer oder ein Polymergemisch mit einer Dicke über 0,05 mm ist und dass die Membran (2) eine Palladium- oder Palladium-Silber-Legierungsmembran mit einer Dicke von 0,03 $\mu m$ bis 1 $\mu m$, einer Oberfläche von 0,003 $mm^2$ bis 1 $mm^2$ ist und in welcher das Verhältnis S/e von 0,09 $mm^2/\mu m$ bis 1 $mm^2/\mu m$ schwankt.

12. Superkondensator nach einem der Ansprüche 1 bis 3, **dadurch gekennzeichnet, dass** die Membran (2) eine selbsttragende Membran ist.

13. Superkondensator nach Anspruch 12, **dadurch gekennzeichnet, dass** die Membran (2) eine Dicke von über oder gleich 5 $\mu m$ hat.

14. Superkondensator nach Anspruch 12 oder 13, **dadurch gekennzeichnet, dass** die Membran (2) eine Oberfläche im Bereich von 0,15 $mm^2$ bis 100 $mm^2$, eine Dicke von 5 $\mu m$ bis 100 $\mu m$ hat und dass das Verhältnis S/e von 0,03 $mm^2/\mu m$ bis 1 $mm^2/\mu m$ schwankt.

15. Superkondensator nach Anspruch 13, **dadurch gekennzeichnet, dass** die Membran (2) eine Palladiummembran ist und dass sie eine Oberfläche im Bereich von 0,25 $mm^2$ bis 10 $mm^2$ hat und dass das Verhältnis S/e von 0,05

mm$^2$/$\mu$m bis 0,1 mm$^2$/$\mu$m schwankt.

16. Superkondensator nach Anspruch 15, **dadurch gekennzeichnet, dass** die Membran (2) eine Dicke von 25 $\mu$m, eine Oberfläche von 1,5 mm$^2$ hat und dass das Verhältnis S/e 0,06 mm$^2$/$\mu$m beträgt.

17. Superkondensator nach Anspruch 12, **dadurch gekennzeichnet, dass** die Membran (2) von einer Folie aus einem Metall gebildet ist, das aus Nb, V und Ta ausgewählt ist, mit einer Dicke von über oder gleich 5 $\mu$m, platziert zwischen zwei kontinuierlichen Palladiumfolien mit einer Dicke unter 1 $\mu$m.

18. Superkondensator nach einem der Ansprüche 1 bis 3, **dadurch gekennzeichnet, dass** die Membran (2) eine nicht selbsttragende Membran ist, gebildet von einer Palladium- oder Nickelfolie mit einer Dicke unter 5 $\mu$m.

19. Superkondensator nach einem der Ansprüche 1 bis 3, **dadurch gekennzeichnet, dass** die Membran (2) eine nicht selbsttragende Membran ist, gebildet von einer Folie eines Metalls, ausgewählt aus Nb, V, Ta, und Fe, mit einer Dicke unter 5 $\mu$m, platziert zwischen zwei kontinuierlichen Palladiumfolien mit einer Dicke unter 1 $\mu$m.

20. Superkondensator nach Anspruch 3, **dadurch gekennzeichnet, dass** die Legierung aus $Pd_{75}Ag_{25}$, $Pd_{92}Y_8$, $Pd_{93,5}Ce_{6,5}$, $Pd_{60}Cu_{40}$, $V_{85}Ni_{15}$, stabilisiert mit 0,05 % Yttrium oder Titan, $V_{53}Ti_{26}Ni_{21}$, $V_{50}Nb_{50}$, $V_{13}Cri_{11}Al_3Ti_{73}$, $Nb_{56}Ti_{23}Ni_{21}$, $Nb_{68}Ti_{17}Ni_{15}$ und $Nb_{99}Zr_1$ ausgewählt ist.

21. Superkondensator nach einem der Ansprüche 1 bis 3, **dadurch gekennzeichnet, dass** die Membran (2) ein an einem seiner Enden geschlossenes, an dem anderen Ende offenes und in der Hülle derart platziertes Metallrohr (15) ist, dass sein offenes Ende an den Gasaustauschmitteln befestigt ist.

22. Superkondensator nach Anspruch 1, **dadurch gekennzeichnet, dass** die Gasaustauschmittel in Form einer Öffnung (10) in der Hülle sind.

23. Superkondensator nach Anspruch 22, **dadurch gekennzeichnet, dass** die Membran (2) von einem Plättchen aus Metall oder einer Metalllegierung gebildet ist, die um die Öffnung (10) durch Schweißen, Löten, Diffusionslöten oder Bördeln befestigt ist.

## Claims

1. A supercapacitor comprising a closed chamber which is equipped with means for exchanging a gas with the external environment and in which two electrodes with a high specific surface area are placed while being separated by a separator, the separator and the electrodes being impregnated with an electrolyte, **characterized in that** the means for exchanging a gas comprise a membrane (2) which is permeable to hydrogen and its isotopes and impermeable to gas species which have a cross section greater than or equal to 0.3 nm, at a temperature of between -50°C and 100°C, and **in that** the membrane has a surface area S (in m$^2$) and a thickness e (in m), and **in that** it consists of a material which is selected from among metals and metal alloys and the intrinsic permeability $\Phi$ of which (in mol.m$^{-1}$.s$^{-1}$.Pa$^{-1/2}$) is selective with respect to hydrogen and has a value such that 10$^{-15}$ mol.s$^{-1}$.Pa$^{-1/2}$ $\leq$ ($\Phi$*S)/e $\leq$ 10$^{-9}$ mol.s$^{-1}$.Pa$^{-1/2}$.

2. The supercapacitor as claimed in claim 1, **characterized in that** mol.m$^{-1}$.s$^{-1}$.Pa$^{-1/2}$ $\leq$ ($\Phi$*S)/e $\leq$ 5 10$^{-10}$ mol.s$^{-1}$.P$^{-1/2}$.

3. The supercapacitor as claimed in claim 1 or 2, **characterized in that** the metals are selected from among Pd, Nb, V, Ta, Ni and Fe and **in that** the metal alloys are selected from among the alloys of a metal selected from among Pd, Nb, V and Ta and at least one other metal selected from among Pd, Nb, V, Ta, Fe, Al, Cu, Ru, Re, Rh, Au, Pt, Ag, Cr, Co, Sn, Zr, Y, Ni, Ce, Ti, Ir and Mo.

4. The supercapacitor as claimed in any one of claims 1 to 3, **characterized in that** on at least one of its surfaces the membrane (2) carries an additional layer (1,3) of a hydrogen-permeable material whose limits do not extend beyond the limits of the membrane (2).

5. The supercapacitor as claimed in claim 4, **characterized in that** the membrane (2) carries two additional layers (1, 3) consisting of the same hydrogen-permeable material or two additional layers consisting of different materials.

6. The supercapacitor as claimed in claim 4 or 5, **characterized in that** the hydrogen-permeable material of the additional layer or layers (1, 3) is selected from among polymers, ceramics, carbon and metals.

7. The supercapacitor as claimed in any one of claims 4 to 6, **characterized in that** the hydrogen-permeable material of the additional layer or layers (1,3) is a metal or a metal alloy, **in that** the membrane (2) has a surface area of from 0.0007 $mm^2$ to 100 $mm^2$ and a thickness of from 0.03 $\mu m$ to 10 $\mu m$, and **in that** the ratio S/e varies from 0.025 $mm^2/\mu m$ to 0.1 $mm^2/\mu m$.

8. The supercapacitor as claimed in claim 7, **characterized in that** the hydrogen-permeable material of the additional layer or layers (1, 3) is palladium, **in that** the membrane (2) has a surface area of from 0.0015 $mm^2$ to 1 $mm^2$, and **in that** the ratio S/e varies from 0.05 $mm^2/\mu m$ to 0.1 $mm^2/\mu m$.

9. The supercapacitor as claimed in claim 4, **characterized in that** at least one of the elements among the membrane (2) and the additional layer or layers (1, 3) is a sintered material.

10. The supercapacitor as claimed in claim 9, **characterized in that** at least one additional layer (1, 3) is a sintered material having a thickness of more than 0.3 mm, and **in that** the membrane (2) is a membrane made of palladium or a palladium-silver alloy having a thickness of from 0.03 $\mu m$ to 10 $\mu m$ and a surface area of from 0.0015 $mm^2$ to 10 $mm^2$, and in which the ratio S/e varies from 0.05 $mm^2/\mu m$ to 1 $mm^2/\mu m$.

11. The supercapacitor as claimed in claim 6, **characterized in that** the hydrogen-permeable material of the additional layer or layers (1, 3) is a polymer or a mixture of polymers having a thickness of more than 0.05 mm, and **in that** the membrane (2) is a membrane made of palladium or a palladium-silver alloy having a thickness of from 0.03 $\mu m$ to 1 $\mu m$ and a surface area of from 0.003 $mm^2$ to 1 $mm^2$, and in which the ratio S/e varies from 0.09 $mm^2/\mu m$ to 1 $mm^2/\mu m$.

12. The supercapacitor as claimed in any one of claims 1 to 3, **characterized in that** the membrane (2) is a self supported membrane.

13. The supercapacitor as claimed in claim 12, **characterized in that** the membrane (2) has a thickness greater than or equal to 5 $\mu m$.

14. The supercapacitor as claimed in claim 12 or 13, **characterized in that** the membrane (2) has a surface area of between 0.15 $mm^2$ and 100 $mm^2$ and a thickness of from 5 $\mu m$ to 100 $\mu m$, and **in that** the ratio S/e varies from 0.03 $mm^2/\mu m$ to 1 $mm^2/\mu m$.

15. The supercapacitor as claimed in claim 13, **characterized in that** the membrane (2) is a palladium membrane, **in that** it has a surface area of between 0.25 $mm^2$ and 10 $mm^2$, and **in that** the ratio S/e varies from 0.05 $mm^2/\mu m$ to 0.1 $mm^2/\mu m$.

16. The supercapacitor as claimed in claim 15, **characterized in that** the membrane (2) has a thickness of 25 $\mu m$ and a surface area of 1.5 $mm^2$, and **in that** the ratio S/e is 0.06 $mm^2/\mu m$.

17. The supercapacitor as claimed in claim 12, **characterized in that** the membrane (2) consists of a film of a metal selected from among Nb, V and Ta having a thickness greater than or equal to 5 $\mu m$, placed between two continuous palladium films having a thickness of less than 1 $\mu m$.

18. The supercapacitor as claimed in any one of claims 1 to 3, **characterized in that** the membrane (2) is a non-self supported membrane consisting of a palladium or nickel film having a thickness of less than 5 $\mu m$.

19. The supercapacitor as claimed in any one of claims 1 to 3, **characterized in that** is a non-self supported membrane (2) consisting of a film of a metal selected from among Nb, V, Ta, and Fe, having a thickness of less than 5 $\mu m$, placed between two continuous palladium films having a thickness of less than 1 $\mu m$.

20. The supercapacitor as claimed in claim 3, **characterized in that** the alloy is selected from among $Pd_{75}Ag_{25}$, $Pd_{92}Y_8$, $Pd_{93.5}Ce_{6.5}$, $Pd_{60}Cu_{40}$, $V_{85}Ni_{15}$ stabilized with 0.05% yttrium or titanium, $V_{53}Ti_{26}Ni_{21}$, $V_{50}Nb_{50}$, $V_{13}Cr_{11}Al_3Ti_{73}$, $Nb_{56}Ti_{23}Ni_{21}$, $Nb_{68}Ti_{17}Ni_{15}$ and $Nb_{99}Zr_1$.

**21.** The supercapacitor as claimed in any one of claims 1 to 3, **characterized in that** the membrane (2) is a metal tube (15) which is closed at one of its ends, open at the other end and placed in the chamber so that its open end is fixed to the means for exchanging a gas.

**22.** The supercapacitor as claimed in claim 1, **characterized in that** the means for exchanging a gas are in the form of an opening (10) in the chamber.

**23.** The supercapacitor as claimed in claim 22, **characterized in that** the membrane (2) consists of a pellet of metal or a metal alloy, which is fixed around said opening (10) by welding, brazing, diffusion brazing or crimping.

**Fig. 1**

## Fig. 2

## Fig. 3

**Fig. 4**

**Fig. 5**

Fig. 6

Fig. 7

## Fig. 8

| | Pd |
|---|---|
| ● ● | Joint |
| ▓▓▓ | couvercle |

## Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6233135 B
- DE 102005033476
- WO 02059990 A2
- EP 1118378 A1
- US 3350846 A
- US 4468235 A
- US 2773561 A
- US 6800392 B

**Littérature non-brevet citée dans la description**

- **S.A. STEWARD.** Review of Hydrogen Isotope Permeability Through Materials. Lawrence Livermore National Laboratory, 15 Août 1983
- **J. PIPER.** Diffusion of hydrogen in copper-palladium alloys. *J. Appl. Phys.,* 1966, vol. 37, 715-721
- **K. YAMAKAWA et al.** Hydrogen permeability measurement through Pd, Ni and Fe membranes. *J. Alloys and Compounds,* 2001, vol. 321, 17-23
- **R. PIETRZAK et al.** Investigation of Electromigration and Diffusion of Hydrogen in Palladium and PdAg Alloy. *Defect and Diffusion Forum,* 1997, vol. 143-147, 951-956
- **S. TOSTI et al.** Catalytic membrane reactors for tritium recovery from tritiated water in the ITER fuel cycle. *Fusion Engineering and Design,* 2000, vol. 49-50, 953-958
- *Journal of Membrane Science,* 1993, vol. 85, 29-38
- **C.K. GUPTA.** Extractive Metallurgy of Niobium. CRC Press, 1994
- **T. M. ADAMS ; J. MICKALONIS.** Hydrogen Permeability of Multiphase V-Ti-Ni Metallic Membrane. *Report under Contact No. DE-AC09-96SR18500 with the U.S. Department of Energy*
- **NISHIMURA et al.** V-Ni Alloy Membranes for Hydrogen Purification. *JAC,* 2002, vol. 330-332, 902-906